# EUROPEAN PATENT SPECIFICATION

(11) **EP 3 775 138 B1**
(45) Date of publication and mention of the grant of the patent: **25.02.2026**
(21) Application number: 19716735.6
(22) Date of filing: 27.03.2019
(51) Int. Cl.: C11D 3/43, C11D 7/50

(54) **COMPOSITIONS AND METHODS FOR CLEANING AND STRIPPING**
ZUSAMMENSETZUNGEN UND VERFAHREN ZUM REINIGEN UND ABBEIZEN
COMPOSITIONS ET PROCÉDÉS DE NETTOYAGE ET DE DÉCAPAGE

(30) Priority: 30.03.2018 US 201862650363 P
(43) Date of publication of application: 17.02.2021
(73) Proprietor: AdvanSix Resins & Chemicals LLC, Parsippany, New Jersey 07054 (US)
(72) Inventor: ASIRVATHAM, Edward, Parsippany, New Jersey 07054 (US); MOUDGIL, Karttikay, Parsippany, New Jersey 07054 (US)
(74) Representative: Crooks, Elizabeth Caroline
(86) International application number: PCT/US2019/024302
(87) International publication number: WO 2019/191245

(56) References cited:
- WO-A1-2005/092953
- CA-C- 1 320 675
- CN-A- 108 378 051
- DE-A1- 102007 028 890
- US-A1- 2019 077 724

## Description

### FIELD

The present disclosure relates to compositions and methods for cleaning materials from substrates. In particular, the disclosure relates to compositions and methods for cleaning or stripping paints, inks, coatings and resins from substrates.

### BACKGROUND

Cleaning compositions are widely used to remove paints, inks, and polymer resins from a variety of substrates. For example, cleaning compositions are used to strip cured paint from substrates, clean wet, or partially cured paint from painting equipment, clean ink from rollers in lithographic printing, and clean polymer resin from polymer resin processing equipment.

In some cases, the one or more solvents include N-methyl-2-pyrrolidone (NMP). NMP is an excellent solvent for many of the most difficult to dissolve materials. However, NMP has been found to be a reproductive toxin. According to an EPA assessment of potential risks to people, acute and chronic risks identified for people who use NMP for less than 4 hours per day could be reduced by use of appropriate chemical resistance gloves. However, gloves and respirators do not adequately reduce risks to people who use NMP for more than four hours per day on a single day or repeatedly over a succession of days. What is needed is a solvent that dissolves paint, ink, and resins that is neither a reproductive toxin nor a suspected carcinogen or mutagen.

WO 2005/092953 A1 discloses the use of N-methylcaprolactam as a solvent, diluent, extraction agent, cleaning agent, degreasing agent, absorbing agent and/or dispersing agent, particularly as a partial or full substitute for N-methyl-2-pyrrolidone (NMP), chloridized hydrocarbons and/or ether.

CA 1 320 675 C discloses a paint stripping composition used in a process where it is applied to a substrate coated with fully or partially cured paint, having particular utility for use in stripping paint with other utilities, e.g. stripping organic polymer coatings also contemplated, and a method of employing same is described.

DE 10 2007 028890 A1 discloses new solvents for use in processes for the production of polyurethane dispersions and their use in polyurethane dispersions, where the solvents are selected from the group consisting of a mixture of at least one N-(cyclo)alkyl pyrrolidone and at least one di(cyclo) alkyl dipropylene glycol ether, and/or at least one N-(cyclo) alkyl caprolactam, where the (cyclo)alkyl radical of the N-(cyclo)alkyl pyrrolidone has at least 2 carbon atoms.

### SUMMARY

The present disclosure provides the use of a composition for cleaning or stripping a material from a substrate, said composition comprising: a primary solvent; and a co-solvent including N-ethylcaprolactam; wherein the material includes a paint, an ink, a coating, or a polymer resin.

The present disclosure provides a composition including a primary solvent and a co-solvent. The co-solvent includes N-ethylcaprolactam.

A concentration of the co-solvent in the composition may be from 5 wt. % - 49 wt. % of the composition. The one or more caprolactam-derived solvents in the composition include N-ethylcaprolactam and may include at least one of: N-methylcaprolactam and N-butylcaprolactam. The one or more caprolactam-derived solvents in the composition may include two caprolactam-derived solvents, provided that at least one of the solvents is N-ethylcaprolactam. Each of the two caprolactam-derived solvents in the composition may be from 5 wt. % - 95 wt. % of the co-solvent. The two caprolactam-derived solvents in the composition may be N-methylcaprolactam and N-ethylcaprolactam. Alternatively, the two caprolactam-derived solvents in the composition may be N-ethylcaprolactam and N-butylcaprolactam.

The caprolactam-derived solvents in the composition may further include a third caprolactam-derived solvent, provided that at least one of the solvents is N-ethylcaprolactam. Each of the three caprolactam-derived solvents in the composition may be from 5 wt. % - 90 wt. % of the co-solvent. The three caprolactam-derived solvents in the composition may be N-methylcaprolactam, N-ethylcaprolactam, and N-butylcaprolactam. The composition may further include a surfactant. The composition may further include a thickening agent.

In another form thereof, the present disclosure provides a method of cleaning a material from a substrate. The method includes applying a composition to the material on the substrate for a period of time to dissolve at least some of the material and then removing the composition including the dissolved material from the substrate, composition including a primary solvent and a co-solvent, where the co-solvent includes N-ethyl caprolactam.

The one or more caprolactam-derived solvents of the method include N-ethylcaprolactam and may include at least one of: N-methylcaprolactam, and N-butylcaprolactam. The one or more caprolactam-derived solvents of the method may include at least two of: N-methylcaprolactam, N-ethylcaprolactam, and N-butylcaprolactam, provided that at least one of the solvents is N-ethylcaprolactam. The composition of the method may further include at least one of: a surfactant and a thickening agent. The material of the method includes a paint, an ink, and/or a polymer resin.

The above mentioned and other features of the invention, and the manner of attaining them, will become more apparent and the invention itself will be better understood by reference to the following description.

### DETAILED DESCRIPTION

The present disclosure provides for compositions for cleaning or stripping a material from a substrate in which caprolactam-derived solvents replace NMP in the compositions. The basis of the caprolactam-derived solvents, caprolactam, has not been found to be, and is not expected to be, either a reproductive toxin or a carcinogen. In particular, N-methylcaprolactam is not considered to be either a reproductive toxin or a carcinogen. Thus, N-ethylcaprolactam and the other described caprolactam-derived solvents, such as N-methylcaprolactam, and N-butylcaprolactam, are significantly safer solvents than NMP. Caprolactam-derived solvents have surprisingly been found to be as effective as NMP in dissolving many materials.

The present disclosure provides for a composition including a primary solvent and a co-solvent. The co-solvent includes N-ethylcaprolactam. The caprolactam-derived solvents can be according to the general formula: 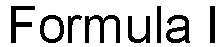 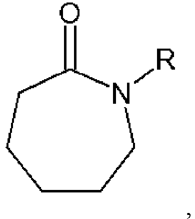 in which R is a linear, alkyl group of 1, 2 or 4 unsubstituted carbons. For example, if R is a methyl group (-CH₃) then the caprolactam-derived solvent can be N-methylcaprolactam according to Formula II:

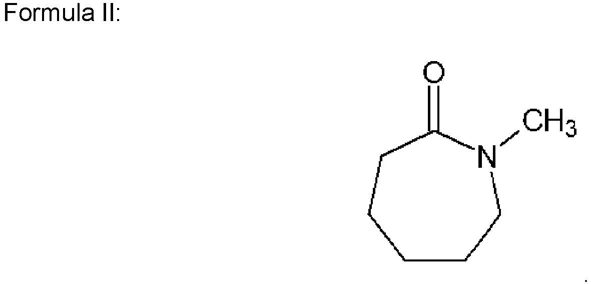

If R is an ethyl group (-CH₂CH₃), then the caprolactam-derived solvent is N-ethylcaprolactam according to Formula III:

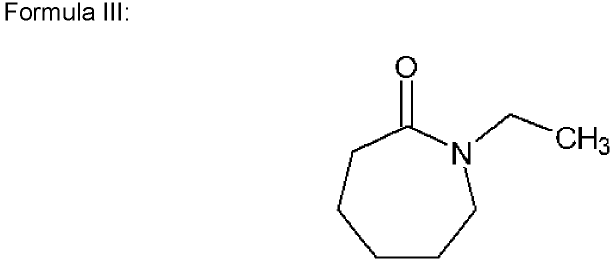

If R is a butyl group (-CH₂CH₂CH₂CH₃), then the caprolactam-derived solvent can be N-butylcaprolactam according to Formula IV:

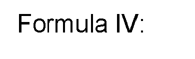

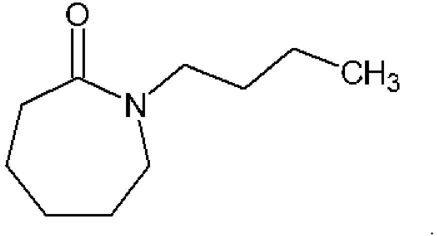

The co-solvent includes N-ethylcaprolactam and can include N-methylcaprolactam, and/or N-butylcaprolactam. The co-solvent can consist of N-ethylcaprolactam.

The co-solvent may include two of the caprolactam-derived solvents, provided that at least one of the solvents is N-ethylcaprolactam. For example, the co-solvent can include N-methylcaprolactam and N-ethylcaprolactam. Alternatively, the co-solvent can include N-ethylcaprolactam and N-butylcaprolactam. The co-solvent can consist of two of the caprolactam-derived solvents as described above, provided that at least one of the solvents is N-ethylcaprolactam.

In compositions in which the co-solvent includes two of the caprolactam-derived solvents, each of the caprolactam-derived solvents can be as little as 5 weight percent (wt.%), 6 wt. %, 8 wt. %, 10 wt. %, 15 wt. %, 20 wt. %, 25 wt. %, 30 wt. %, 33 wt. %, 35 wt. %, 40 wt. %, 45 wt. %, or 49 wt. %, or as great as 51 wt. %, 55 wt. %, 60 wt. %, 65 wt. %, 67 wt. %, 70 wt. %, 75 wt. %, 80 wt. %, 85 wt. %, 90 wt. %, 92 wt. %, 94 wt. %, or 95 wt. % of the total weight of the co-solvent, or may be within any range defined between any two of the foregoing values, such as, 5 wt. % to 95 wt. %, 6 wt. % to 94 wt. %, 8 wt. % to 92 wt. %, 10 wt. % to 90 wt. %, 15 wt. % to 85 wt. %, 20 wt. % to 80 wt. %, 25 wt. % to 75 wt. %, 30 wt. % to 70 wt. %, 33 wt. % to 67 wt. %, 35 wt. % to 65 wt. %, 40 wt. % to 60, 45 wt. % to 55 wt. %, wt. %, or 49 wt. % to 51 wt. %, for example.

In compositions in which the co-solvent includes N-methylcaprolactam and N-ethylcaprolactam, each of the caprolactam-derived solvents can be as little as 5 weight percent (wt.%), 6 wt. %, 8 wt. %, 10 wt. %, 15 wt. %, 20 wt. %, 25 wt. %, 30 wt. %, 33 wt. %, 35 wt. %, 40 wt. %, 45 wt. %, or 49 wt. %, or as great as 51 wt. %, 55 wt. %, 60 wt. %, 65 wt. %, 67 wt. %, 70 wt. %, 75 wt. %, 80 wt. %, 85 wt. %, 90 wt. %, 92 wt. %, 94 wt. %, or 95 wt. % of the total weight of the co-solvent, or may be within any range defined between any two of the foregoing values, such as, 5 wt. % to 95 wt. %, 6 wt. % to 94 wt. %, 8 wt. % to 92 wt. %, 10 wt. % to 90 wt. %, 15 wt. % to 85 wt. %, 20 wt. % to 80 wt. %, 25 wt. % to 75 wt. %, 30 wt. % to 70 wt. %, 33 wt. % to 67 wt. %, 35 wt. % to 65 wt. %, 40 wt. % to 60, 45 wt. % to 55 wt. %, wt. %, or 49 wt. % to 51 wt. %, for example.

In compositions in which the co-solvent includes N-ethylcaprolactam and N-butylcaprolactam, each of the caprolactam-derived solvents can be as little as 5 weight percent (wt.%), 6 wt. %, 8 wt. %, 10 wt. %, 15 wt. %, 20 wt. %, 25 wt. %, 30 wt. %, 33 wt. %, 35 wt. %, 40 wt. %, 45 wt. %, or 49 wt. %, or as great as 51 wt. %, 55 wt. %, 60 wt. %, 65 wt. %, 67 wt. %, 70 wt. %, 75 wt. %, 80 wt. %, 85 wt. %, 90 wt. %, 92 wt. %, 94 wt. %, or 95 wt. % of the total weight of the co-solvent, or may be within any range defined between any two of the foregoing values, such as, 5 wt. % to 95 wt. %, 6 wt. % to 94 wt. %, 8 wt. % to 92 wt. %, 10 wt. % to 90 wt. %, 15 wt. % to 85 wt. %, 20 wt. % to 80 wt. %, 25 wt. % to 75 wt. %, 30 wt. % to 70 wt. %, 33 wt. % to 67 wt. %, 35 wt. % to 65 wt. %, 40 wt. % to 60, 45 wt. % to 55 wt. %, wt. %, or 49 wt. % to 51 wt. %, for example.

The co-solvent can include three of the caprolactam-derived solvents. In compositions in which the co-solvent includes three of the caprolactam-derived solvents, the co-solvent can include N-methylcaprolactam, N-ethylcaprolactam, and N-butylcaprolactam. The co-solvent can consist of three of the caprolactam-derived solvents as described above.

In compositions in which the co-solvent includes three of the caprolactam-derived solvents, each of the caprolactam-derived solvents can be as little as 5 wt. %, 6 wt. %, 8 wt. %, 10 wt. %, 15 wt. %, 20 wt. %, 25 wt. %, 30 wt. %, 33 wt. %, 35 wt. %, 40 wt. %, 45 wt. %, or 49 wt. %, or as great as 50 wt. %, 55 wt. %, 60 wt. %, 65 wt. %, 67 wt. %, 70 wt. %, 75 wt. %, 80 wt. %, 84 wt. %, 88 wt. %, or 90 wt. % of the total weight of the co-solvent, or within any range defined between any two of the foregoing values, such as , 5 wt. % to 90 wt. %, t wt. % to 88 wt. %, 8 wt. % to 84 wt. %, 10 wt. % to 80 wt. %, 15 wt. % to 70 wt. %, 20 wt. % to 60 wt. %, or 25 wt. % to 50 wt. %, for example.

The primary solvent can include an aromatic hydrocarbon solvent, an aliphatic hydrocarbon solvent, water, or any combination thereof. Such solvents can be less expensive than the caprolactam-derived solvents and thus lower the overall cost of the composition. The primary solvent can include alkyl lactates, esters, such as butyl propionate, lactones such as γ-butyrolactone, dioxolanes, glycols, glycol ethers, glycol ether acetates, ether esters such as ethyl-3 ethoxy propionate, dialkyl carbonates, alkylene carbonates, alkoxyalcohols, and diabasic esters, such as dimethyl esters of adipic, glutaric, and succinic acids, ketones, such as cyclohexanone, water, or any combination thereof.

A concentration of the co-solvent in the composition can be as little as 5 wt. %, 6 wt. %, 8 wt. %, 10 wt. %, 15 wt. %, 20 wt. %, 25 wt. %, or as great as 30 wt. %, 33 wt. %, 35 wt. %, 40 wt. %, 45 wt. %, or 49 wt. % of the total weight of the composition, or may be within any range defined between any two of the foregoing values, such as 5 wt. % to 49 wt. %, 6 wt. % to 45 wt. %, 8 wt. % to 40 wt. %, 10 wt. % to 35 wt. %, 20 wt. % to 30 wt. %, or 25 wt. % to 33 wt. %, for example.

Cleaning a material from a substrate can include contacting the material on the substrate with any of the compositions as described above for a period of time, and then removing the composition including at least some of the dissolved material from the substrate. Some of the material not dissolved by the composition may also be removed because the composition has dissolved a portion of the material bonding the undissolved material to the substrate.

The composition can further include a surfactant. The surfactant can provide for improved wetting of the material to be dissolved by the composition. The surfactant can include ethoxylated glycerin/fatty acid esters such as ethoxylated glyceryl fatty acid esters (e.g., PEG 20 glyceryl laurate, PEG 20 glyceryl oleate, PEG 20 glyceryl oleoricinoleate, and PEG 20 glyceryl stearate), sorbitan esters and ethoxylated sorbitan esters (e.g., sorbitan monolaurate and sorbitan trioleate), glycerol monooleate, glycerol dioleate, PEG alkoxylated block polymers, alkoxylated alcohols, alkoxylated alkylphenols, alkoxylated amines, alkoxylated amides, alkoxylated fatty esters, alkoxylated oils, fatty esters, alkoxylated fatty acids, sorbitan derivatives, alkylaryl sulfonates, alkylaryl sulfonic acids, carboxylated alcohol ethoxylates, alkylphenol ethoxylates, carboxylic acids, diphenyl sulfonate derivatives, olefin sulfonates, phosphate esters, phosphorous organic derivatives, anionic surfactants (e.g., sodium lauryl sulfate), and quaternary surfactants, or any combination thereof.

The surfactant can be as little as 0.1 wt.%, 0.2 wt. %, 0.4 wt. %, 0.6 wt. %, 0.8 wt. %, or 1.0 wt. %, or as great as 1.2 wt. %, 1.4 wt. %, 1.6 wt. %, 1.8 wt. %, or 2.0 wt. % of the total weight of the composition, or may be within any range defined between any two of the foregoing values, such as, 0.1 wt. % to 2.0 wt. %, 0.2 wt. % to 1.8 wt. %, 0.4 wt. % to 1.6 wt. %, 0.6 wt. % to 1.4 wt. %, or 0.8 wt. % to 1.2 wt. %, for example.

The composition can further include a thickening agent. The thickening agent can provide the composition with sufficient viscosity to be able to cling to non-horizontal substrates. This can permit the composition to remain in contact with, for example, a vertical painted substrate for a time sufficient for the composition to break down and dissolve at least some the paint and enable removal of the paint from the underlying substrate. The thickener can include organoclays, fatty acid salts, fumed silica, paraffinic waxes, and alkylated, esterified, and oxyalkylated cellulose derivatives, such as ethyl cellulose, cellulose acetate butyrate, hydroxypropyl methyl cellulose, and methyl cellulose, or combinations thereof.

The thickening agent can be as little as 0.1 wt.%, 0.2 wt. %, 0.4 wt. %, 0.6 wt. %, 0.8 wt. %, or 1.0 wt. %, or as great as 1.2 wt. %, 1.4 wt. %, 1.6 wt. %, 1.8 wt. %, or 2.0 wt. % of the total weight of the composition, or may be within any range defined between any two of the foregoing values, such as, 0.1 wt. % to 2.0 wt. %, 0.2 wt. % to 1.8 wt. %, 0.4 wt. % to 1.6 wt. %, 0.6 wt. % to 1.4 wt. %, or 0.8 wt. % to 1.2 wt. %, for example.

The composition may further include additives such as activators and corrosion inhibitors, or neutralizers. The activators can chemically attack organics in the material and enhance the performance of the composition. The neutralizers can prevent corrosion of the substrate due to the corrosive nature of some activators or surfactants.

Any of the compositions described above can be applied to a substrate to clean or strip a material from the substrate. Materials to be cleaned or stripped from the substrate can include, without limitation, paints (cured, partially cured, or uncured), inks such as flexographic and gravure inks, coatings such as acrylic and alkyd coatings, and polymer resins such polyester resins. The composition can be applied to the substrate by, for example, spraying, brushing, or pouring. Substrates can be formed of metals, wood, or polymers.

As used herein, the phrase "within any range defined between any two of the preceding values" literally means that any range may be selected from any two of the values listed prior to such phrase regardless of whether the values are in the lower part of the listing or in the higher part of the listing. For example, a pair of values may be selected from two lower values, two higher values, or a lower value and a higher value.

### EXAMPLES

The Examples below demonstrate the effectiveness of compositions including a co-solvent including one or more caprolactam-derived solvents and methods for cleaning or stripping a material from a substrate using such solvents, according to this disclosure. The compositions are evaluated against commercially available cleaning or stripping products, as well as against compositions using N-methyl pyrrolidone as a co-solvent instead of one or more caprolactam-derived solvents.

### Preparation of Coated Substrates

The various compositions and cleaning stripping or products (collectively "paint strippers") were tested against up to five coatings, on wood substrates, metal substrates, or both. The wood substrates were pine panels prepared by sanding with 240 grit. The metal substrates were cold-rolled steel panels pretreated with zinc phosphate. The substrates were cleaned to remove debris, dirt, dust, or grease.

The five coatings were: a solvent-borne alkyd paint (SB Alkyd), a solvent-borne 2K epoxy (SB 2K Epoxy), a water-borne 2K epoxy (WB 2K Epoxy), a water-borne acrylic architectural paint (WB Acrylic) and a water-borne polyurethane dispersion industrial coating (WB PUD).

The coatings were applied to the substrates per ASTM D6189 using a high-volume, low pressure (HVLP) spray gun. The coatings were applied to each substrate in three layers, with the second layer tinted differently than the first and third layers so that the efficacy of the paint strippers could be determined at different layers of coating. Each layer was applied to a thickness of about 0.05 to 0.064 mm (2 to 2.5 mils), dry film thickness for a total coating thickness of about 0.15 to 0.19 mm (6 to 7.5 mils), dry film thickness.

### Paint Stripping Formulations

The caprolactam-derived co-solvents N-methyl caprolactam (Reference Example), N-ethyl caprolactam, and N-butyl caprolactam (Reference Example) were incorporated into various paint stripper formulations. N-methyl pyrrolidone was also incorporated into various paint stripper formulations. The formulations were based on butyl propionate and ethyl-3-ethoxy propionate solvents (Formulation 1) or acetone, 1,3-dioxolane, and propylene carbonate solvents (Formulation 2). Each formulation was made by adding the base solvents to a co-solvent in a large glass container and mixing in a 15 wt.% paraffinic wax solution, a cellulose ether thickening agent, sodium lauryl sulfate surfactant, and ethanolamine neutralizer. The 15 wt.% paraffinic wax solution was prepared by adding Sasol Wax (Spray 30-G) from Sasol^{®} Performance Chemicals, Hamburg, Germany to VM&P naptha and stirring at 1,000 RPM for 30-45 minutes until the wax was completely dissolved. The cellulose ether was Methocel^{™} 311 from ChemPoint, Bellevue, WA. The mixture was stirred with a mechanical stirrer until all components were incorporated into the mixture, and then filtered through a 125-micron paint filter to remove any undissolved particles. In the case of N-butyl caprolactam (Reference Example), after the 15 wt.% paraffinic wax solution and the cellulose ether thickening agent were added, but before the remaining components were added, the formulation was heated to 65°C for ten minutes, and then cooled to room temperature to build the necessary viscosity profile.

### Example 1 - Paint Stripper Effectiveness - Fifteen Minute Residence Time at Room Temperature

Five paint stripper formulations were prepared as described above. Three were based on Formulation 1 and included N-methyl caprolactam (Reference Example), N-ethyl caprolactam or N-methyl pyrrolidine as a co-solvent with the weight percentages of each component shown in Table 1. Two were based on Formulation 2 and included N-methyl caprolactam (Reference Example) or N-ethyl caprolactam as a co-solvent with the weight percentages of each component shown in Table 2. The five paint stripper formulations were applied to wood or metal substrates using a solvent-resistant brush, with strokes in one direction from top to bottom. Rust-Oleum^{®} Automotive Stripper and Blue Bear^{®} Paint & Urethane Stripper were also similarly applied to wood or metal substrates for comparison purposes. Rust-Oleum^{®} Automotive Stripper is a highly effective dichloromethane-based stripper. Blue Bear^{®} Paint & Urethane Stripper contains 41% N-methyl pyrrolidone.

**Table 1**

| | **Formulation 1** | | |
|---|---|---|---|
| | **N-methyl caprolactam** | **N-ethyl caprolactam** | **N-methyl pyrrolidone** |
| **Co-solvent** | 46.39% | 46.39% | 46.39% |
| **Butyl propionate** | 36.08% | 36.08% | 36.08% |
| **Ethyl-3-ethoxy propionate** | 10.31% | 10.31% | 10.31% |
| **Wax solution** | 4.64% | 4.64% | 4.64% |
| **Cellulose ether** | 1.55% | 1.55% | 1.55% |
| **Sodium lauryl sulfate** | 0.52% | 0.52% | 0.52% |
| **Ethanolamine** | 0.52% | 0.52% | 0.52% |

N-methylcaprolactam is provided as a reference example.

**Table 2**

| | **Formulation 2** | |
|---|---|---|
| | **N-methyl caprolactam** | **N-ethyl caprolactam** |
| **Co-solvent** | 18.60% | 18.60% |
| **Acetone** | 27.90% | 27.90% |
| **1,3-Dioxolane** | 37.20% | 37.20% |
| **Propylene carbonate** | 9.30% | 9.30% |
| **Wax solution** | 4.50% | 4.50% |
| **Cellulose ether** | 1.50% | 1.50% |
| **Sodium lauryl sulfate** | 0.50% | 0.50% |
| **Ethanolamine** | 0.50% | 0.50% |

N-methylcaprolactam is provided as a reference example.

After fifteen minutes of paint stripper residence time on the substrates at room temperature, the substrates were scraped with a plastic paint scraper and the extent of coating removal for each of the seven paint strippers was evaluated as shown in Table 3, per ASTM D6189:

**Table 3**

| **Rating** | **Amount of Coating Removal** |
|---|---|
| 5 | 100% |
| 4 | 75% |
| 3 | 50% |
| 2 | 25% |
| 1 | 10% |
| 0 | None |

The results are shown in Table 4:

**Table 4**

| | **SB Alkyd** | **SB 2K Epoxy** | **WB 2K Epoxy** | **WB Acrylic** | **WB PUD** |
|---|---|---|---|---|---|
| **Formulation 1 - N-methyl caprolactam** | 0 | 3-4 | 0 | 4-5 | 2-3 |
| **Formulation 1 - N-ethyl caprolactam** | 0 | 3-4 | 0 | 4-5 | 2-3 |
| **Formulation 1 - N-methyl pyrrolidone** | 0 | 3-4 | 0 | 4-5 | 2-3 |
| **Formulation 2 - N-methyl caprolactam** | 0 | 1-2 | 0 | 2-3 | 1-2 |
| **Formulation 2 - N-ethyl caprolactam** | 0 | 1-2 | 0 | 2-3 | 1-2 |
| **Rust-Oleum^{®} Automotive Stripper** | 4-5 | 4-5 | 4-5 | 4-5 | 4 |
| **Blue Bear^{®} Paint & Urethane Stripper** | 0 | 3-4 | 0 | 4-5 | 2-3 |

N-methylcaprolactam is provided as a reference example.

As shown in Table 4, only the dichloromethane-based commercial stripper was effective against the alkyd and water-borne epoxy coatings. It was also the most effective against all coatings. However, use of dichloromethane-based strippers is generally limited to the severe toxicity concerns of dichloromethane. The formulations based on Formulation 1 were as effective as the N-methyl pyrrolidone-base commercial stripper. The formulations based on Formulation 2 were less effective than those based on Formulation 1. Thus, formulations including N-methyl caprolactam (Reference Example) or N-ethyl caprolactam as a co-solvent are as effective in coating removal applications as formulations including N-methyl pyrrolidone as a co-solvent.

### Example 2 - Paint Stripper Effectiveness - One Hour Residence Time at Elevated Temperature

Three paint stripper formulations were prepared as described above with the weight percentages of each component shown in Table 5. The three formulations were based on Formulation 1 as described above and included N-methyl caprolactam (Reference Example), N-ethyl caprolactam or N-methyl pyrrolidine as a co-solvent. The three paint stripper formulations were applied to metal substrates with SB Alkyd or WB 2K Epoxy coatings, as described above. These are the two coatings that were not removed at all by the formulations containing N-methyl caprolactam (Reference Example), N-ethyl caprolactam or N-methyl pyrrolidine as a co-solvent after fifteen minutes at room temperature in Example 1.

**Table 5**

| | **Formulation 1** | | |
|---|---|---|---|
| | **N-methyl caprolactam** | **N-ethyl caprolactam** | **N-methyl pyrrolidone** |
| **Co-solvent** | 46.39% | 45.64% | 46.39% |
| **Butyl propionate** | 36.08% | 35.50% | 36.08% |
| **Ethyl-3-ethoxy propionate** | 10.31% | 10.14% | 10.31% |
| **Wax solution** | 4.64% | 4.56% | 4.64% |
| **Cellulose ether** | 1.55% | 3.15% | 1.55% |
| **Sodium lauryl sulfate** | 0.52% | 0.51% | 0.52% |
| **Ethanolamine** | 0.52% | 0.51% | 0.52% |

N-methylcaprolactam is provided as a reference example.

After fifteen minutes of paint stripper residence time on the substrates an elevated temperature of about 49°C (120°F), the substrates were scraped with a plastic paint scraper and the extent of coating removal for each of the three paint strippers was evaluated using the criteria shown in Table 2. If any of the coating remained after fifteen minutes, the coated substrates were again exposed to an elevated temperature of about 49°C (120°F) for another fifteen minutes, and again scraped with a plastic paint scraper and the extent of coating removal for each of the paint strippers was evaluated using the criteria shown in Table 3. The process was repeated until the coating was removed from the substrate, or until a total of sixty minutes of residence time had elapsed. The results are shown in Table 6.

**Table 6**

| | **SB Alkyd** | **WB 2K Epoxy** |
|---|---|---|
| **Formulation 1 - N-methyl caprolactam** | 5 (after 30 minutes) | 0 (after 60 minutes) |
| **Formulation 1 - N-ethyl caprolactam** | 5 (after 30 minutes) | 0 (after 60 minutes) |
| **Formulation 1 - N-methyl pyrrolidone** | 5 (after 15 minutes) | 0 (after 60 minutes) |

N-methylcaprolactam is provided as a reference example.

As shown in Table 6, at longer times and higher temperatures, the formulations including N-methyl caprolactam (Reference Example), N-ethyl caprolactam or N-methyl pyrrolidine as a co-solvent are very effective at removing the SB Alkyd coating. The formulation including N-methyl pyrrolidine as a co-solvent removed all of the SB Alkyd coating in fifteen minutes, and the formulations including N-methyl caprolactam (Reference Example) or N-ethyl caprolactam as a co-solvent removed all of the SB Alkyd coating in thirty minutes. Base on observation of the wrinkling of the coatings, it appeared that the formulation including the N-methyl caprolactam (Reference Example) as a co-solvent was more effective than the formulation including the N-ethyl caprolactam as a co-solvent. None of the three formulations appeared to be effective in removing the WB 2K Epoxy coating, even with a total residence time of one hour at the elevated temperature.

Thus, it is shown that formulations including N-ethyl caprolactam have the potential to replace dichloromethane for some coating types, requiring only a somewhat longer residence time and heat.

### Example 3 - Paint Stripper Effectiveness - Fifteen Minute Residence Time at Room Temperature - N-Butyl Caprolactam (Reference Example)

A paint stripper formulation based on Formulation 1 and including N-butyl caprolactam as a co-solvent was prepared as described above with the weight percentages of each component shown in Table 7. The paint stripper formulation was applied to metal substrates with SB 2K Epoxy or WB Acrylic coatings, and to wood substrates with WB Acrylic or WB PUD coatings, as described above. These are the three coatings that were at least partially removed by the formulations containing N-methyl caprolactam, N-ethyl caprolactam or N-methyl pyrrolidine as a co-solvent after fifteen minutes at room temperature in Example 1.

**Table 7**

| | **Formulation 1 N-butyl caprolactam** |
|---|---|
| **Co-solvent** | 48.54% |
| **Butyl propionate** | 37.75% |
| **Ethyl-3-ethoxy propionate** | 10.79% |
| **Wax solution** | 1.39% |
| **Cellulose ether** | 0.46% |
| **Sodium lauryl sulfate** | 0.54% |
| **Ethanolamine** | 0.54% |

After fifteen minutes of paint stripper residence time on the substrates at room temperature, the substrates were scraped with a plastic paint scraper and the extent of coating removal was evaluated as shown in Table 2, per ASTM D6189. The results are show in Table 8:

**Table 8**

| | **SB 2K Epoxy** | **WB Acrylic** | **WB PUD** |
|---|---|---|---|
| **Formulation 1 - N-butyl caprolactam** | 1-2 | 4-5 | 2-3 |

As shown in Table 8 and Table 4, the formulation including N-butyl caprolactam as a co-solvent was about as effective in removing WB Acrylic and WB PUD coatings as formulations including N-methyl caprolactam, N-ethyl caprolactam or N-methyl pyrrolidine as a co-solvent. The formulation including N-butyl caprolactam as a co-solvent was slightly less effective in removing the SB 2K Epoxy coating than formulations including N-methyl caprolactam, N-ethyl caprolactam or N-methyl pyrrolidine as a co-solvent. Thus, formulations including N-methyl caprolactam, N-ethyl caprolactam or N-butyl caprolactam as a co-solvent confer similar paint stripping properties as N-methyl pyrrolidone.

## Claims

1. Use of a composition for cleaning or stripping a material from a substrate, said composition comprising:
a primary solvent; and
a co-solvent including N-ethyl caprolactam;
wherein the material includes a paint, an ink, a coating, or a polymer resin.

2. The use of claim 1, wherein a concentration of the co-solvent is 5 wt. % - 49 wt. % of the composition.

3. The use of claims 1 or 2, further including a surfactant.

4. The use of any of claims 1-3 further including thickening agent.

5. The use of any one of claims 1 to 4, wherein the substrate is metal, wood or polymer.

6. The use of any one of claims 1 to 5 wherein the paint is cured, partially cured or uncured.

7. The use of any one of claims 1 to 6, wherein the composition is for use in stripping cured paints from substances, cleaning wet or partially cured paint from painting equipment, cleaning ink from rollers in lithographic printing and cleaning polymer resin from polymer resin processing equipment

8. A method of cleaning a material from a substrate, the method comprising:
applying a composition to the material on the substrate for a period of time to dissolve at least some of the material, the composition including a primary solvent and a co-solvent, the co-solvent including N-ethyl caprolactam; and
removing the composition including the dissolved material from the substrate
wherein the material includes a paint, an ink and/or a polymer resin.

9. The method of claim 8, wherein the composition further includes at least one of: a surfactant and a thickening agent.

10. The method of any one of claims 8 to 9, wherein the composition is applied to the substrate by spraying, brushing or pouring.

11. The method of any one of claims 8 to 10, wherein the substrate is metal, wood or polymer.

12. The method of any one of claims 8 to 11 wherein the paint is cured, partially cured or uncured.

## Patentansprüche

1. Verwendung einer Zusammensetzung zum Reinigen oder Ablösen eines Materials von einem Substrat, wobei die Zusammensetzung umfasst:
ein primäres Lösungsmittel; und
ein Co-Lösungsmittel, das N-Ethylcaprolactam enthält;
wobei das Material einen Anstrich, eine Tinte, eine Beschichtung oder ein Polymerharz einschließt.

2. Verwendung nach Anspruch 1, wobei eine Konzentration des Co-Lösungsmittels 5 Gew.-% bis 49 Gew.-% der Zusammensetzung beträgt.

3. Verwendung nach Ansprüchen 1 oder 2, die ferner ein Tensid einschließt.

4. Verwendung nach einem der Ansprüche 1-3, die ferner Verdickungsmittel einschließt.

5. Verwendung nach einem der Ansprüche 1 bis 4, wobei das Substrat Metall, Holz oder Polymer ist.

6. Verwendung nach einem der Ansprüche 1 bis 5, wobei der Anstrich gehärtet, teilweise gehärtet oder ungehärtet ist.

7. Verwendung nach einem der Ansprüche 1 bis 6, wobei die Zusammensetzung zur Verwendung bei Ablösen von gehärteten Anstrichen von Stoffen, Reinigen nasser oder teilweise gehärteter Anstriche von Anstrichausrüstung, Reinigen von Tinte von Walzen bei dem Lithographiedruck und Reinigen von Polymerharz von Polymerharzverarbeitungsausrüstung ist.

8. Verfahren zum Reinigen eines Materials von einem Substrat, wobei das Verfahren umfasst:
Aufbringen einer Zusammensetzung auf das Material auf dem Substrat für einen Zeitraum, um wenigstens einen Teil des Materials aufzulösen, wobei die Zusammensetzung ein primäres Lösungsmittel und ein Co-Lösungsmittel enthält, wobei das Co-Lösungsmittel N-Ethylcaprolactam enthält; und
Entfernen der Zusammensetzung, die das gelöste Material enthält, von dem Substrat,
wobei das Material einen Anstrich, eine Tinte und/oder ein Polymerharz einschließt.

9. Verfahren nach Anspruch 8, wobei die Zusammensetzung ferner wenigstens eines von enthält von: einem Tensid und einem Verdickungsmittel.

10. Verfahren nach einem der Ansprüche 8 bis 9, wobei die Zusammensetzung durch Sprühen, Bürsten oder Gießen auf das Substrat aufgebracht wird.

11. Verfahren nach einem der Ansprüche 8 bis 10, wobei das Substrat Metall, Holz oder Polymer ist.

12. Verfahren nach einem der Ansprüche 8 bis 11, wobei der Anstrich gehärtet, teilweise gehärtet oder ungehärtet ist.

## Revendications

1. Utilisation d'une composition pour le nettoyage ou le décapage d'un matériau sur un substrat, ladite composition comprenant :
un solvant primaire ; et
un co-solvant comprenant du N-éthylcaprolactame ;
dans laquelle le matériau comprend une peinture, une encre, un revêtement ou une résine de polymère.

2. Utilisation selon la revendication 1, dans laquelle une concentration du co-solvant est de 5 % en poids à 49 % en poids de la composition.

3. Utilisation selon la revendication 1 ou 2, comprenant en outre un tensioactif.

4. Utilisation selon l'une quelconque des revendications 1 à 3, comprenant en outre un agent épaississant.

5. Utilisation selon l'une quelconque des revendications 1 à 4, dans laquelle le substrat est un métal, du bois ou un polymère.

6. Utilisation selon l'une quelconque des revendications 1 à 5, dans laquelle la peinture est durcie, partiellement durcie ou non durcie.

7. Utilisation selon l'une quelconque des revendications 1 à 6, dans laquelle la composition est destinée à être utilisée dans le décapage de peintures durcies sur des substances, le nettoyage de peinture humide ou partiellement durcie sur des équipements de peinture, le nettoyage d'encre sur des rouleaux d'impression lithographique et le nettoyage d'une résine de polymère sur des équipements de traitement de résine de polymère.

8. Procédé de nettoyage d'un matériau sur un substrat, le procédé comprenant :
l'application d'une composition sur le matériau sur le substrat pendant une période de temps pour dissoudre au moins une partie du matériau, la composition comprenant un solvant primaire et un co-solvant, le co-solvant comprenant du N-éthylcaprolactame ; et
l'élimination de la composition comprenant le matériau dissous sur le substrat
dans lequel le matériau comprend une peinture, une encre et/ou une résine de polymère.

9. Procédé selon la revendication 8, dans lequel la composition comprend en outre au moins l'un des éléments suivants : un tensioactif et un agent épaississant.

10. Procédé selon l'une quelconque des revendications 8 à 9, dans lequel la composition est appliquée sur le substrat par pulvérisation, brossage ou versement.

11. Procédé selon l'une quelconque des revendications 8 à 10, dans lequel le substrat est un métal, du bois ou un polymère.

12. Procédé selon l'une quelconque des revendications 8 à 11, dans lequel la peinture est durcie, partiellement durcie ou non durcie.
